# EUROPÄISCHE PATENTSCHRIFT

(11) **EP 3 536 431 B1**
(45) Veröffentlichungstag und Bekanntmachung des Hinweises auf die Patenterteilung: **18.01.2023**
(21) Anmeldenummer: 19000034.9
(22) Anmeldetag: 21.01.2019
(51) Int. Cl.: B23B 31/36

(54) **VORRICHTUNG ZUR MECHANISCHEN BEARBEITUNG EINES WERKSTÜCKS**
DEVICE FOR MACHINING A WORKPIECE
DISPOSITIF D'USINAGE MÉCANIQUE D'UNE PIÈCE À USINER

(30) Priorität: 07.03.2018 DE 102018001869
(43) Veröffentlichungstag der Anmeldung: 11.09.2019
(73) Patentinhaber: Neumayer Tekfor Engineering GmbH, 77756 Hausach (DE)
(72) Erfinder: Vogel, Niels, 36205 Sontra (DE); Aschenbrenner, Daniel, 37211 Alheim (DE); Penner, Andreas, 36251 Bad Hersfeld (DE); Trinter, Steffen, 36217 Ronshausen (DE)

(56) Entgegenhaltungen:
- US-A- 158 007
- US-A- 375 011
- US-A- 4 771 521

## Beschreibung

Die vorliegende Erfindung betrifft eine Vorrichtung zur mechanischen Bearbeitung eines Werkstücks mit den Merkmalen des Oberbegriffs des ersten Anspruchs. Weiterhin bezieht sich die Erfindung auf einen Halteadapter, der beispielsweise Teil einer Vorrichtung zur mechanischen Bearbeitung eines Werkstücks ist, mit den Merkmalen des Oberbegriffs des vierten Anspruchs. Das Werkstück besteht beispielsweise zumindest teilweise aus einem Metall, z. B. Stahl.

Eine gattungsgemäße Vorrichtung zur mechanischen Bearbeitung eines Werkstücks beschreibt die US 4,771,521 A.

Für die mechanische und insbesondere spanabhebende Bearbeitung von Werkstücken (z. B. aus Metall) tritt im Stand der Technik zumeist eine Relativbewegung zwischen dem Werkstück und einem Werkzeug auf. Bekannt ist auch, dass wenigstens eine Komponente (also Werkstück oder Werkzeug) um eine Drehachse gedreht wird. Für die Erzeugung der Drehung ist eine entsprechende Drehvorrichtung vorhanden, die mit einer passenden Spannrichtung mechanisch gekoppelt ist, die die betroffene Komponente festhält. Bei aufwendigen Geometrien der Werkstücke ist es bekannt, unterschiedliche relative Bewegungen auszuführen oder entsprechende Werkzeuge zu verwenden.

Im Stand der Technik offenbart beispielsweise die DE 32 16 345 A1 eine Vorrichtung mit einem Schwenkwerk, durch welches ein Werkstück um einen Schwenkwinkel bewegt wird. Umgekehrt offenbart die DE 10 2014 203 402 B3 eine Schleifmaschine, bei der Schleifscheiben in unterschiedlichen Orientierungen zum Werkstück Verwendung finden. Der DE 24 21 670 A1 lässt sich eine Vorrichtung entnehmen, bei der Rollwerkzeuge während einer Bearbeitung gegenüber dem Werkstück verstellt werden. In der DE 200 05 386 U1 findet sich eine Halteeinrichtung, in welcher eine Bearbeitungsachse (z. B. eine Bohrachse) exzentrisch (insbesondere parallel versetzt) zu einer Zentralachse angeordnet ist. Eine Gruppe von unterschiedlichen Werkzeugaufnahmeeinheiten offenbart die DE 41 02 937 A1. Die einzelnen Gruppenmitglieder unterscheiden sich hinsichtlich des Winkels zwischen einem Spannfutter und einer Eingangswelle voneinander. Ein Verkippen einer Längsachse eines Werkzeugs relativ zu einer Drehachse einer Antriebswelle wird in der DE 102 29 134 A1 beschrieben. Andere Spannfutter offenbaren beispielsweise die US 375,011 A oder die US 158,007 A.

Die der Erfindung zugrundeliegende Aufgabe besteht darin, eine Vorrichtung für die mechanische Bearbeitung eines Werkstücks bzw. eine Haltevorrichtung für eine solche Vorrichtung vorzuschlagen, die eine Alternative zum Stand der Technik darstellt.

Die Erfindung löst die Aufgabe durch eine Vorrichtung zur mechanischen Bearbeitung eines Werkstücks mit den Merkmalen des ersten Anspruchs. Dabei sind die Drehvorrichtung und der Halteadapter mechanisch miteinander gekoppelt, sodass die Drehvorrichtung eine Drehung des Halteadapters um eine Drehachse erzeugt. Zudem hält der Halteadapter ein Spannteil für die mechanische Behandlung des Werkstücks so, dass die Drehachse und eine Längsachse des Spannteils einen Winkel größer Null Grad miteinander einschließen.

Die Vorrichtung erlaubt beispielsweise die Bearbeitung des Werkstücks, bei der die Orientierung der Drehachse unverändert bleibt. Alternativ oder ergänzend kann beispielsweise die Position des Gegenstücks zum Spannteil (ist das Spannteil das Werkstück, so ist das Gegenstück das Werkzeug; ist das Spannteil das Werkzeug, so ist das Gegenstück das Werkstück) nur über eine einfache Bewegung verändert werden (z. B. eine Bewegung senkrecht zur Drehachse). Es sind somit insbesondere keine aufwendigen relativen Bewegungen zwischen Werkstück und Werkzeug erforderlich.

Die Vorrichtung bezieht sich insbesondere auf die Bearbeitung von metallischen Werkstücken, die überdies vorzugsweise rotationssymmetrisch zu einer Längsachse ausgestaltet sind. In einer Ausgestaltung betrifft die Bearbeitung insbesondere eine Bearbeitung einer Stirnseite des Werkstücks, wobei beispielsweise die Stirnseite unter einem gewissen Winkel abgeschrägt wird.

In der erfindungsgemäßen Vorrichtung wird somit das Spannteil unter einem Winkel zur Drehachse gehalten. Damit ist das Spannteil schräg fixiert. Das Spannteil ist dabei je nach Ausgestaltung oder Anwendung das Werkstück selbst oder ein Werkzeug. Die Schrägstellung führt dazu, dass eine relative Bewegung des Gegenstücks zum Spannteil (also entsprechend von Werkzeug oder Werkstück) senkrecht zur Drehachse zu einer Bearbeitung des Spannteils unter einem Neigungswinkel führt. Somit ist es beispielsweise ausreichend, wenn das Gegenstück zum Spannteil nur eine einfache Bewegung vollzieht.

Wird beispielsweise eine Stirnseite des Werkstücks abgeschrägt, so ist dies durch eine relative Bewegung unter einem rechten Winkel zur Drehachse möglich. Ist zusätzlich das Gegenstück zum Spannteil ebenfalls drehend um eine Achse angeordnet, so vollziehen beispielsweise die Vorrichtung und das Gegenstück jeweils Drehungen um identische und/oder parallele Achsen.

Die Drehvorrichtung erzeugt die eigentlichen Drehungen und ist mechanisch mit dem Halteadapter gekoppelt, sodass der Halteadapter und dadurch letztendlich das Spannteil gedreht wird.

Der Halteadapter ist weitgehend kreiszylindrisch ausgestaltet und eine Stirnseite des Halteadapters ist unter einem vorgebbaren Winkel schräg abgeschnitten. Der Halteadapter ist zumindest teilweise kegelstumpfförmig oder zylinderstumpfförmig ausgeführt. Die Stirnseite endet insbesondere nicht in einer kreiszylindrischen Form, sondern ist abgeschrägt.

Erfindungsgemäß ist ferner eine Ausgleichsvorrichtung vorhanden, die eine durch das Spannteil verursachte Unwucht ausgleicht. Da das Spannteil schräg angeordnet ist, führen die Drehungen um die Drehachse zu einer Unwucht, welche hier durch die Ausgleichsvorrichtung kompensiert bzw. zumindest reduziert wird. Die Ausgestaltung der Ausgleichsvorrichtung ist unter anderem abhängig von dem Winkel zwischen der Längsachse des Spannteils und der Drehachse sowie von dem Gewicht des Spannteils.

Der Halteadapter weist entlang der Drehachse eine größere axiale Erstreckung als die Ausgleichsvorrichtung auf. Der Halteadapter überragt die Ausgleichsvorrichtung in axialer Richtung (gesehen von der Drehvorrichtung).

Erfindungsgemäß sind ein Durchmesser eines von dem Halteadapter beschriebenen Kreises und ein Durchmesser eines von der Ausgleichsvorrichtung beschriebenen Kreises im Wesentlichen gleich.

Die Grundformen von Halteadapter und die Ausgleichsvorrichtung sind in einer Ausgestaltung jeweils kreiszylindrische oder zumindest rotationssymmetrische Formen.

In einer Ausgestaltung ist die Ausgleichsvorrichtung so ausgestaltet, dass sie die durch die Abschrägung des Halteadapters fehlende Stelle des Kreiszylinders des Halteadapters zumindest teilweise ausgleicht.

Eine Ausgestaltung besteht darin, dass der Halteadapter als Spannzangenfutter ausgestaltet ist. Der Halteadapter ist in dieser Ausgestaltung somit ausgebildet als Spannmittel, das über eine Hülse - das Futter - verfügt, in dessen Innenraum das Spannteil eingebracht wird, um im gespannten Zustand über radiale Kräfte fixiert zu werden.

Erfindungsgemäß ist vorgesehen, dass der Halteadapter eine Flanschbuchse und eine Spannbuchse aufweist, dass die Flanschbuchse die Spannbuchse umfasst, und dass in einem gespannten Zustand die Spannbuchse eine radiale Kraft auf das Spannteil ausübt. Eine Spannbuchse nimmt das Spannteil auf. Damit geht insbesondere in einer Ausgestaltung einher, dass die Spannbuchse eine Längsachse aufweist, die mit der Drehachse einen Winkel einschließt. Das Schrägstehen des Spannteils wird somit dadurch bewirkt, dass die Spannbuchse entsprechend schräg angeordnet ist. Die Spannbuchse ist dabei von der Flanschbuchse umgeben. Die Stirnseite der Flanschbuchse ist - in der Funktion als Stirnseite des Halteadapters - abgeschrägt. Ergänzend ist in einer Ausgestaltung die Stirnseite der Flanschbuchse zumindest teilweise kreiszylindrisch ausgestaltet.

Eine Ausgestaltung besteht darin, dass die Flanschbuchse zumindest teilweise aus Aluminium besteht und hart eloxiert ist. Durch diese Ausgestaltung wird die Beständigkeit erhöht.

Eine alternative oder ergänzende Ausgestaltung sieht vor, dass das Spannteil das mechanisch zu bearbeitende Werkstück ist.

Eine Ausgestaltung besteht darin, dass das Spannteil ein Werkzeug für die mechanische Bearbeitung des Werkstücks ist.

Weiterhin bezieht sich die Erfindung auf einen Halteadapter zum Halten eines Spannteils, insbesondere für eine mechanische Bearbeitung eines Werkstücks, mit den Merkmalen des vierten Anspruchs. Dabei ist der Halteadapter für eine mechanische Verbindung mit einer Drehvorrichtung ausgestaltet. Die Drehvorrichtung erzeugt eine Drehung des Halteadapters um eine Drehachse. Dabei hält der Halteadapter das Spannteil so, dass die Drehachse und eine Längsachse des Spannteils einen Winkel größer Null Grad miteinander einschließen. In Bezug auf den Halteadapter gelten die obigen Ausgestaltungen, da insbesondere der Halteadapter nach einer der vorgenannten Ausgestaltungen ausgeführt sein kann. Auf eine Wiederholung wird damit verzichtet.

Zudem bezieht sich die Erfindung auf eine Anordnung mit einem Halteadapter und einer Ausgleichsvorrichtung gemäß einer der vorgenannten Ausgestaltungen.

Im Einzelnen gibt es eine Vielzahl von Möglichkeiten, die erfindungsgemäße Vorrichtung und den Halteadapter auszugestalten und weiterzubilden. Dazu wird verwiesen einerseits auf die dem Patentanspruch 1 nachgeordneten Patentansprüche und den Patentanspruch 4, andererseits auf die folgende Beschreibung von Ausführungsbeispielen in Verbindung mit der Zeichnung. Es zeigen:
- Fig. 1: jeweils einen Schnitt durch ein Werkstück vor (Fig. 1 a)) und nach einer mechanischen Bearbeitung (Fig. 1 b)),
- Fig. 2: einen Schnitt durch eine Vorrichtung zur mechanischen Bearbeitung mit einem eingespannten Spannteil,
- Fig. 3: eine seitliche Darstellung der Vorrichtung der Fig. 2 und
- Fig. 4: eine räumliche Darstellung der Vorrichtung der Fig. 2.

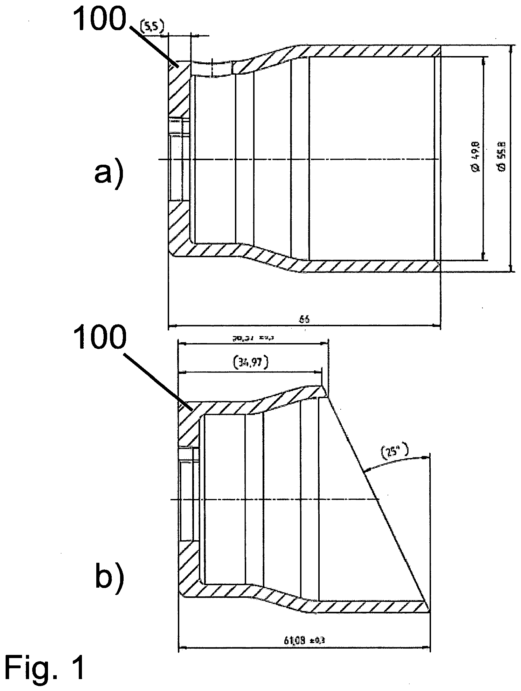

Die Fig. 1 zeigt ein Werkstück 100 vor (Fig. 1 a)) und nach einer mechanischen und spanabhebenden Bearbeitung (Fig. 1 b)).

Die mechanische Bearbeitung besteht dabei darin, dass eine Stirnseite des an sich kreiszylindrischen Werkstücks 100 unter einem vorgegebenen Winkel - hier beispielhaft 25° - abgeschrägt wird. Dies geschieht, indem Material des Werkstücks 100 an dieser Stirnseite abgetragen wird. Die Bearbeitung führt in dem gezeigten Beispiel ebenfalls zu einer Verkürzung der Länge des Werkstücks 100.

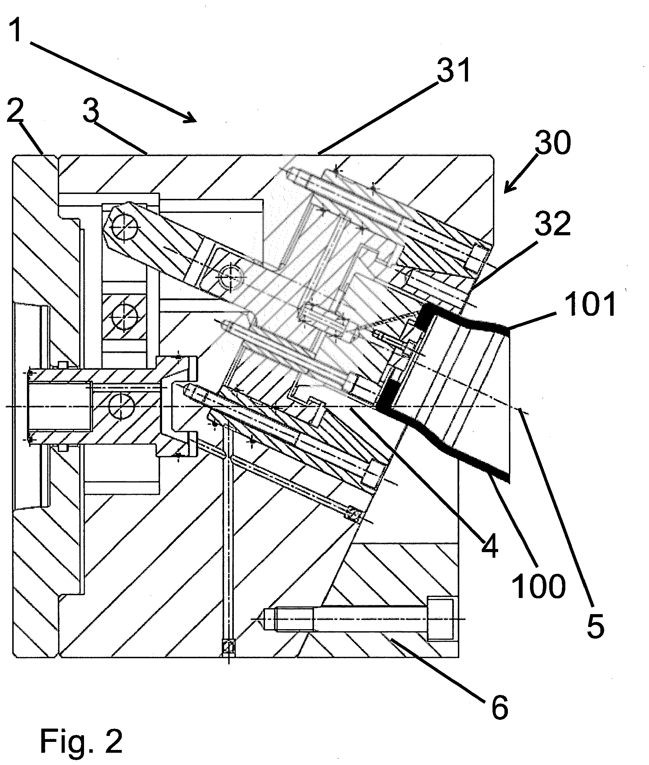

Die folgenden Abbildungen Fig. 2 bis Fig. 4 zeigen eine beispielhafte Ausgestaltung einer Vorrichtung 1 zum Halten eines Spannteils 101.

Das Spannteil 101 ist dabei je nach Ausgestaltung der Vorrichtung 1 oder je nach Anwendung entweder das Werkstück 100 selbst oder ein Werkzeug, mit dem das Werkstück 100 bearbeitet wird.

Bei der Bearbeitung wird somit jeweils mit einem - hier nicht dargestellten - Werkzeug das Werkstück 100 bearbeitet, wobei durch die Vorrichtung 1 das in der Vorrichtung 1 befestigte Spannteil 101 für die Bearbeitung um eine Drehachse 4 gedreht wird.

Das Spannteil 101 ist hier insbesondere rotationssymmetrisch um die Längsachse 5.

Die Vorrichtung 1 verfügt über eine eigentliche Drehvorrichtung 2, die die Drehungen um die Drehachse 4 bewirkt.

Mechanisch mit der Drehvorrichtung 2 gekoppelt ist der Halteadapter 3 vorhanden, der der eigentliche Träger des Spannteils 101 ist. Der Halteradapter 3 kann dabei von der Drehvorrichtung 2 beliebig wieder entfernt werden. In der gezeigten Ausgestaltung wird ein Flansch über eine Zugstange mit der Drehvorrichtung 2 verbunden. Anstelle des hier dargestellten Hebelmechanismus zur Befestigung des Halteadapters 3 bietet sich beispielsweise auch ein hydraulischer Mechanismus mit einem entsprechenden Reservoir an.

Der Halteadapter 3 verfügt weiterhin über eine Flanschbuchse 31. In der von der Drehvorrichtung 2 abgewandten Stirnseite der Flanschbuchse 31 ist eine Aussparung vorhanden, in der eine Spannbuchse 32 angeordnet ist.

Die Spannbuchse 32 ist wiederum mit weiteren Komponenten als Bestandteilen des Halteadapters 3 kontaktiert. Die Komponenten bewirken insgesamt, dass in einem gespannten Zustand die Spannbuchse 32 eine radiale Kraft auf das Spannteil 101 ausübt und es damit festhält.

Durch die besondere Ausgestaltung des Halteadapters 3 ist das Spannteil 101 so gehalten oder fixiert, dass eine Längsachse 5 des Spannteils 101 (und hier insbesondere auch der Spannbuchse 32) und die Drehachse 4 einen Winkel größer Null miteinander einschließen. Mit anderen Worten: das Spannteil 101 befindet sich schräg in dem Halteadapter 3.

Wie in der Abbildung Fig. 2 zu erkennen, wirkt sich die Schrägstellung auf die Bearbeitung aus. Hier ist das Spannteil 101 zugleich das Werkstück 100, dessen Stirnseite in der dargestellten Form bearbeitet worden ist. Ist somit das Werkzeug im rechten Winkel zu der Drehachse 4 bewegt worden, so ist damit auch die Stirnseite des Werkstücks 100 schräg abgetragen worden.

Die Flanschbuchse 31 hat im Wesentlichen eine kreissymmetrische Form und ist hier insbesondere ein Zylinder. Die von der Drehvorrichtung 2 abgewandte Stirnseite 30 der Flanschbuchse 31 ist teilweise abgeschrägt. Dies erlaubt z. B. die Montage der oben angesprochenen Komponenten des Halteadapters 3 für die Realisierung der Spannfunktion.

Die Flanschbuchse 31 besteht in der gezeigten beispielhaften Ausgestaltung im Wesentlichen aus Aluminium und ist hart eloxiert. Dies reduziert zum einen das Gewicht des Halteadapters 3 und erhöht zum anderen die Beständigkeit des Halteadapters 3.

Da sich das Spannteil 101 schräg in der Vorrichtung 1 befindet, würde durch die Drehungen um die Drehachse 4 eine Unwucht entstehen.

Eine solche Unwucht wird - in der dargestellten Ausführung der Vorrichtung 1 - reduziert oder kompensiert durch eine Ausgleichsvorrichtung 6. Die Ausgleichsvorrichtung 6 gehört damit auch zu dem Halteadapter 3, da die Unwucht unter anderem abhängig ist vom Winkel der Schrägstellung der Spannbuchse 32 bzw. des Spannteils 101. Daher ist die Ausgleichsvorrichtung 6 auch jeweils an die Orientierung des Spannteils 101 und dessen Eigenschaften anzupassen.

Die Ausgleichsvorrichtung 6 ist in der gezeigten Ausgestaltung ebenfalls - wie der Halteadapter 3 - kreiszylindrisch ausgestaltet, wobei die Flanschbuchse 31 und die Ausgleichsvorrichtung 6 jeweils einen Kreis mit einem - im Wesentlichen - gleichen Radius umschreiben. Die Ausgleichsvorrichtung 6 entspricht in der dargestellten Version somit dem Abschnitt der fehlenden Stirnseite der Flanschbuchse 31.

Zu erkennen ist weiterhin, dass die Ausgleichsvorrichtung 6 eine geringere axiale Erstreckung entlang der Drehachse 4 aufweist als die Flanschbuchse 31. Es besteht somit ein Absatz an der Stirnseite 30 der Haltevorrichtung 3.

Die Ausgleichsvorrichtung 6 ist in der gezeigten Ausgestaltung über eine Schraube mit der Flanschbuchse 31 verbunden.

Die Vorrichtung 1 hat den Vorteil, dass sich eine Luftanlagekontrolle durchführen lässt, um durch das Leiten eines Luftstroms durch die Anlagefläche des Spannteils 101 an dem Halteadapter 3 das Anliegen des Spannteils 101 zu erkennen. Zudem ergibt sich durch den Achszugeffekt eine höhere Stabilität bei der Fixierung des Spannteils 101.

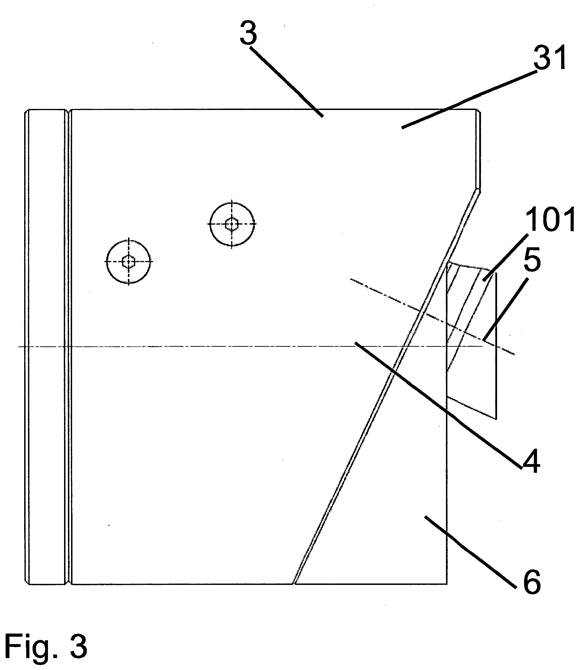

In der seitlichen Ansicht der Fig. 3 ist zu erkennen, dass sich die Flanschbuchse 31 weiter nach vorne erstreckt als die Ausgleichsvorrichtung 6. Weiterhin ist zu erkennen, dass sich durch die Ausgleichsvorrichtung 6 insgesamt wieder eine weitgehend kreiszylindrische Form des Halteadapters 3 um die Drehachse 4 herum ergibt. Es liegt somit eine weitgehend rotationssymmetrische Form von Halteadapter 3 und Ausgleichsvorrichtung 6 vor. Eingezeichnet ist hier auch die Längsachse 5 des Spannteils 101 bzw. der Spannbuchse 32, die mit der Drehachse 4 den Winkel größer Null Grad bildet.

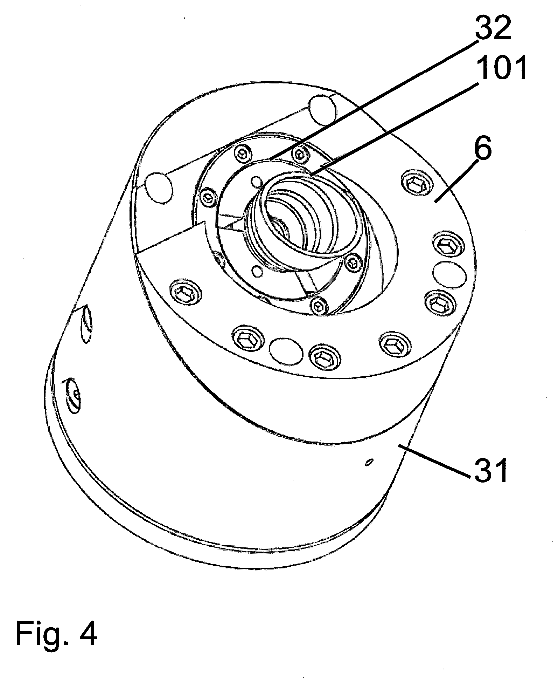

Die Fig. 4 zeigt, wie das Spannteil 101 von der Spannbuchse 32 umgeben ist. Weiterhin ist die teilweise Abschrägung der Stirnseite der Flanschbuchse 31 und der Ausgleich der Abschrägung des Halteadapters 3 durch die Ausgleichsvorrichtung 6 zu erkennen.

## Patentansprüche

1. Vorrichtung (1) zur mechanischen Bearbeitung eines - insbesondere metallischen - Werkstücks (100) mit einer Drehvorrichtung (2) und einem - insbesondere als Spannzangenfutter ausgestalteten - Halteadapter (3),
wobei die Drehvorrichtung (2) und der Halteadapter (3) mechanisch miteinander gekoppelt sind, sodass die Drehvorrichtung (2) eine Drehung des Halteadapters (3) um eine Drehachse (4) erzeugt,
wobei der Halteadapter (3) ein Spannteil (101) für die mechanische Behandlung des Werkstücks (100) so hält, dass die Drehachse (4) und eine Längsachse (5) des Spannteils (101) einen Winkel größer Null Grad miteinander einschließen, und wobei ferner eine Ausgleichsvorrichtung (6) vorhanden ist, die eine durch das Spannteil (101) verursachte Unwucht ausgleicht,
**dadurch gekennzeichnet,**
**dass** der Halteadapter (3) kreiszylindrisch ausgestaltet ist,
**dass** eine Stirnseite (30) des Halteadapters (3) unter einem vorgebbaren Winkel schräg abgeschnitten ist,
**dass** ein Durchmesser eines von dem Halteadapter (3) beschriebenen Kreises und ein Durchmesser eines von der Ausgleichsvorrichtung (6) beschriebenen Kreises im Wesentlichen gleich sind,
**dass** der Halteadapter (3) eine Flanschbuchse (31) und eine Spannbuchse (32) aufweist,
**dass** die Flanschbuchse (31) die Spannbuchse (32) umfasst,
**dass** in einem gespannten Zustand die Spannbuchse (32) eine radiale Kraft auf das Spannteil (101) ausübt,
**dass** eine Stirnseite der Flanschbuchse (31) in der Funktion als Stirnseite (30) des Halteadapters (3) abgeschrägt ist, und
**dass** der Halteadapter (3) entlang der Drehachse (4) eine größere axiale Erstreckung als die Ausgleichsvorrichtung (6) aufweist.

2. Vorrichtung (1) nach Anspruch 1,
wobei die Flanschbuchse (31) zumindest teilweise aus Aluminium besteht und hart eloxiert ist.

3. Vorrichtung (1) nach Anspruch 1 oder 2,
wobei das Spannteil (101) das mechanisch zu bearbeitende Werkstück (100) ist, oder
wobei das Spannteil (101) ein Werkzeug für die mechanische Bearbeitung des Werkstücks (100) ist.

4. Halteadapter (3) zum Halten eines Spannteils (101),
wobei der Halteadapter (3) für eine mechanische Verbindung mit einer Drehvorrichtung (2) ausgestaltet ist,
wobei die Drehvorrichtung (2) eine Drehung des Halteadapters (3) um eine Drehachse (4) erzeugt,
wobei der Halteadapter (3) das Spannteil (101) so hält, dass die Drehachse (4) und eine Längsachse (6) des Spannteils (101) einen Winkel größer Null Grad miteinander einschließen,
und
wobei ferner eine Ausgleichsvorrichtung (6) vorhanden ist, die eine durch das Spannteil (101) verursachte Unwucht ausgleicht,
**dadurch gekennzeichnet,**
**dass** der Halteadapter (3) kreiszylindrisch ausgestaltet ist,
**dass** eine Stirnseite (30) des Halteadapters (3) unter einem vorgebbaren Winkel schräg abgeschnitten ist,
**dass** ein Durchmesser eines von dem Halteadapter (3) beschriebenen Kreises und ein Durchmesser eines von der Ausgleichsvorrichtung (6) beschriebenen Kreises im Wesentlichen gleich sind,
**dass** der Halteadapter (3) eine Flanschbuchse (31) und eine Spannbuchse (32) aufweist,
**dass** die Flanschbuchse (31) die Spannbuchse (32) umfasst,
**dass** in einem gespannten Zustand die Spannbuchse (32) eine radiale Kraft auf das Spannteil (101) ausübt,
**dass** eine Stirnseite der Flanschbuchse (31) in der Funktion als Stirnseite (30) des Halteadapters (3) abgeschrägt ist, und
**dass** der Halteadapter (3) entlang der Drehachse (4) eine größere axiale Erstreckung als die Ausgleichsvorrichtung (6) aufweist.

## Claims

1. Appliance (1) for the mechanical processing of a
workpiece (100) - in particular a metallic one - with a turning device (2) and a holding adapter (3) - equipped with a collet chuck in particular - whereby the turning device (2) and holding adapter (3) are mechanically coupled together so that the turning device (2) can rotate the holding adapter (3) around a rotational axis (4),
whereby the holding adapter (3) holds a clamping part (101) for the mechanical processing
of the workpiece (100) to enable the rotational axis (4) and a longitudinal axis (5) of the clamping part (101) to form an angle greater than zero degrees, and whereby a balancing device (6) is available to offset the imbalance caused by the clamping part (101),
**characterized by** the fact that
the holding adapter (3) has a circular cylindrical design,
an end face (30) of the holding adapter (3) is cut angularly below a predeterminable angle,
a diameter of one of the described holding adapter (3) circles and that of one of the described balancing device (6) circles
are essentially the same,
the holding adapter (3) features a flange bushing (31) and clamping bushing (32), that
the flange bushing (31) encloses the clamping bushing (32),
in a clamped state, the clamping bushing (32) exerts a radial force on the clamping part (101),
an end face of the flange bushing (31) is chamfered in its function as an end face (30) of the holding adapter, and
the holding adapter (3) has a larger axial extension along the rotational axis (4) than the balancing device (6).

2. Appliance (1) according to Claim 1,
whereby the flange bushing (31) at least partially consists of aluminum and is hard-anodized.

3. Appliance (1) according to Claim 1 or 2,
whereby the clamping part (101) is the workpiece (100) that is to be mechanically processed, or
the clamping part (101) is a tool for mechanically processing the workpiece (100).

4. Holding adapter (3) for holding a clamping part (101),
whereby the holding adapter (3) has been designed to connect mechanically to a turning device (2),
whereby the turning device (2) rotates the holding adapter (3) around a rotational axis (4),
whereby the holding adapter (3) holds the clamping part (101) to enable the rotational axis (4) and a longitudinal axis (6) of the clamping part form an angle greater
than zero degrees, and
whereby a balancing device (6) is available to offset the imbalance caused by the clamping part (101),
**characterized by the fact that**
the holding adapter (3) has a circular cylindrical design,
an end face (30) of the holding adapter (3) is cut angularly below a predeterminable angle,
a diameter of one of the described holding adapter (3) circles and that of one of the described balancing device (6) circles
are essentially the same,
the holding adapter (3) features a flange bushing (31) and clamping bushing (32), that the flange bushing (31) encloses the clamping bushing (32),
in a clamped state, the clamping bushing (32) exerts a radial force on the clamping part (101),
an end face of the flange bushing (31) is chamfered in its function as an end face (30) of the holding adapter, and
the holding adapter (3) has a larger axial extension along the rotational axis (4) than the balancing device (6).

## Revendications

1. Dispositif (1) d'usinage mécanique d'une pièce à usiner (100), en particulier une pièce métallique, doté d'un mécanisme de rotation (2) et d'un adaptateur de maintien (3),
notamment équipé comme un mandrin à pince de serrage,
à savoir que le mécanisme de rotation (2) et l'adaptateur de maintien (3) sont couplés mécaniquement l'un à l'autre, de sorte que le mécanisme de rotation (2) entraîne une rotation du l'adaptateur de maintien (3) autour d'un axe de rotation (4),
à savoir que l'adaptateur de maintien (3) maintient un élément de fixation (101) pour la manipulation mécanique
de la pièce à usiner (100) de manière à ce que l'axe de rotation (4) et un axe longitudinal (5) de l'élément de fixation (101) comprennent ensemble un angle supérieur à zéro degré, sachant par ailleurs qu'un dispositif de compensation (6) est présent afin de compenser le déséquilibre causé par l'élément de fixation (101),
**caractérisé en ce que**
l'adaptateur de maintien (3) a une forme cylindrique,
qu'une face avant (30) de l'adaptateur de maintien (3) est découpée en biseau sous un angle à prédéfinir,
qu'un diamètre d'un cercle décrit par l'adaptateur de maintien (3) et un diamètre décrit par le dispositif de compensation (6)
sont pour l'essentiel identiques,
que l'adaptateur de maintien (3) est équipé d'une douille à bride (31) et d'une douille de serrage (32),
que la douille à bride (31) entoure la douille de serrage (32),
qu'à l'état tendu, la douille de serrage (32) exerce une force radiale sur l'élément de fixation (101),
qu'une face avant de la douille à bride (31) est biseautée dans la fonction comme face avant (30) de l'adaptateur de maintien (3), et
que l'adaptateur de maintien (3) présente, le long de l'axe de rotation (4), une extension axiale plus grande
que le dispositif de compensation (6).

2. Dispositif (1) selon la revendication n°1,
à savoir que la douille à bride (31) est au moins en partie en aluminium et anodisée.

3. Dispositif (1) selon la revendication 1 ou 2,
à savoir que l'élément de fixation (101) est la pièce à usiner mécaniquement (100), ou
à savoir que l'élément de fixation (101) est un outil destiné à l'usinage mécanique de la pièce à usiner (100).

4. Adaptateur de maintien (3) pour maintenir un élément de fixation (101).
à savoir que l'adaptateur de maintien (3) est conçu pour un raccord mécanique avec un
mécanisme de rotation (2),
à savoir que le mécanisme de rotation (2) crée une rotation de l'adaptateur de maintien (3) autour d'un axe de rotation (4),
à savoir que l'adaptateur de maintien (3) maintient l'élément de fixation (101) de telle manière que l'axe de rotation (4) et un axe longitudinal (6) de l'élément de fixation (101) supérieur à zéro degré
s'englobent l'un l'autre,
et
à savoir qu'un dispositif de compensation (6) est prévu pour compenser le déséquilibre causé par l'élément de fixation (101),
**caractérisé en ce que**
l'adaptateur de maintien (3) a une forme cylindrique,
qu'une face avant (30) de l'adaptateur de maintien (3) est découpée en biseau sous un angle à prédéfinir,
qu'un diamètre d'un cercle décrit par l'adaptateur de maintien (3) et un diamètre décrit par le dispositif de compensation (6)
sont pour l'essentiel identiques,
que l'adaptateur de maintien (3) est équipé d'une douille à bride (31) et d'une douille de serrage (32),
que la douille à bride (31) entoure la douille de serrage (32),
qu'à l'état tendu, la douille de serrage (32) exerce une force radiale sur l'élément de fixation (101),
qu'une face avant de la douille à bride (31) est biseautée dans la fonction comme face avant (30) de l'adaptateur de maintien (3), et
que l'adaptateur de maintien (3) présente, le long de l'axe de rotation (4), une extension axiale plus grande que le dispositif de compensation (6).
